# EUROPEAN PATENT SPECIFICATION

(11) **EP 4 160 798 B1**
(45) Date of publication and mention of the grant of the patent: **04.11.2026**
(21) Application number: 22197094.0
(22) Date of filing: 22.09.2022
(51) Int. Cl.: H01M 50/202, H01M 50/207, H01M 50/282, H01M 50/367, H01M 50/505, H01M 50/30, H01M 50/358

(54) **BATTERY MODULE AND BATTERY PACK HAVING THE SAME**
BATTERIEMODUL UND BATTERIEPACK DAMIT
MODULE DE BATTERIE ET BLOC-BATTERIE LE COMPRENANT

(30) Priority: 30.09.2021 KR 20210129488
(43) Date of publication of application: 05.04.2023
(73) Proprietor: SK On Co., Ltd., Seoul 03161 (KR)
(72) Inventor: HAN, Jin Su, 34124 Daejeon (KR); KANG, Min Song, 34124 Daejeon (KR); PARK, Ju Yong, 34124 Daejeon (KR); CHO, Sei Hoon, 34124 Daejeon (KR); KIM, Ji Woong, 34124 Daejeon (KR); PAK, Byeong Jun, 34124 Daejeon (KR)
(74) Representative: Prüfer & Partner mbB Patentanwälte · Rechtsanwälte

(56) References cited:
- EP-A1- 4 142 017
- KR-A- 20210 029 125
- US-A1- 2010 266 880
- US-A1- 2012 237 803
- US-A1- 2021 074 972

## Description

### BACKGROUND

### 1. FIELD

The present disclosure relates to technology related to a battery module and a battery pack.

### 2. DESCRIPTION OF RELATED ART

In a lithium secondary battery, several unit cells may be bundled to form a battery pack, and the battery pack may be widely applied to a field requiring high energy, such as a vehicle battery or an energy storage system(ESS).

In US 2021/074972 A1, an energy storage module is described that includes: a plurality of battery cells arranged in a first direction such that long side surfaces of adjacent ones of the battery cells face one another; a plurality of insulation spacers, at least one of the insulation spacers being between each adjacent pair of the battery cells, each of the insulation spacers including a heat-insulating first sheet and a plurality of flame-retardant second sheets respectively adhered to opposite surfaces of the first sheet by an adhesion member; a cover member including an internal receiving space configured to accommodate the battery cells and the insulation spacers; a top plate coupled to the cover member, the top plate including ducts respectively corresponding to vents of the battery cells and having fire extinguishing agent openings respectively corresponding to the insulation spacers; a top cover coupled to the top plate and having discharge openings respectively corresponding to the ducts; and an extinguisher sheet between the top cover and the top plate.

In KR 2021 029125 A, an energy storage module is described. The energy storage module includes: a plurality of battery cells arranged in a longitudinal direction so that long side surfaces thereof face each other; a plurality of insulating spacers interposed between the long side surfaces of the plurality of battery cells; a cover member accommodating the plurality of battery cells and the plurality of insulating spacers through an accommodating space therein; a top plate having a duct coupled to an upper portion of the cover member and formed at positions corresponding to vents of the battery cells, and having an open hole formed at positions corresponding to the insulating spacers; a top cover coupled to an upper portion of the top plate and having a discharge hole at a position corresponding to the duct; and an extinguisher sheet located between the top cover and the top plate and having a fire extinguishing agent to be emitted at a preset temperature or above, wherein a protrusion is formed on a lower surface of the top cover to surround an exhaust area and be coupled to the outside of the duct.

In US 2010 266880 A1, a battery module is described that includes a first enclosure, a second enclosure, and a plurality of batteries having vent holes accommodated between the first and second enclosures. It has a configuration in which a first partition member for accommodating the batteries individually at a position facing the battery vent holes in at least one of the first enclosure and the second enclosure is provided.

In US 2012/237803 A1, a thermal management system is described that uses an integrated battery venting assembly comprised of an integrated exhaust port, a valve retention plate that covers the exhaust port and includes a plurality of retention plate ports, and a plurality of valves that are configured to seal the retention plate ports under normal conditions and unseal the retention plate ports during thermal runaway. As hot gas passes through the retention plate ports, the plate is configured to melt and be ejected, thereby allowing subsequent hot gas to pass through the larger exhaust port. A perforated cover plate may be used to protect the external surfaces of the retention plate and valves. An internally mounted exhaust guide may be used to direct the flow of hot gas expelled during the thermal runaway event.

EP 4 142 017 A1 is a document under Art. 54(3) EPC.

### SUMMARY

An aspect of the present disclosure minimizes a phenomenon in which thermal runaway of a battery cell in a battery module leads to thermal runaway of another battery cell or another battery module.

Another aspect of the present disclosure provides a battery module having a structure for emitting flame, gas or dust occurring due to an abnormal action of a battery cell such as thermal runaway in a secondary battery in a desired direction.

According to the invention there is provided a battery module as defined in claim 1.

The battery module may further include a bus-bar assembly including the at least one bus-bar electrically connected to at least one of the plurality of battery cells, wherein the insulating cover may be disposed to face the bus-bar assembly.

The battery module may further include a heat-resistant sheet disposed between the insulating cover and the bus-bar assembly.

The plurality of battery cells include electrode leads output in a first direction, the insulating cover faces the plurality of battery cells in the first direction, and the venting guide passes through the insulating cover in the first direction.

The battery module includes a cover sheet disposed on the venting guide to prevent foreign material from being introduced into the venting guide.

According to another aspect of the present disclosure, a battery pack includes: a pack housing accomodating a plurality of battery modules as described above.

The pack housing may include a partition wall partitioning an inner space of the pack housing, the partition wall forming a first flow path guiding the flame or gas emitted from the venting guide.

The pack housing may include a lower plate and a side frame disposed on an edge of the lower plate, and the side frame may form a second flow path communicating with the first flow path.

The battery pack may further include a bus-bar assembly including the at least one bus-bar electrically connected to the at least one of the plurality of battery cells, wherein the insulating cover may face the bus-bar assembly.

The battery pack may further include a heat-resistant sheet disposed between the insulating cover and the bus-bar assembly.

The plurality of battery cells may include electrode leads output in a first direction, the insulating cover may face the plurality of battery cells in the first direction, and the venting guide may pass through the insulating cover in the first direction.

The battery pack further includes a cover sheet disposed on the venting guide to prevent foreign material from being introduced into the venting guide.

The partition wall may form two first flow paths spatially separated from each other by its structural shape.

### BRIEF DESCRIPTION OF DRAWINGS

The above and other aspects, features and advantages of the present disclosure will be more clearly understood from the following detailed description taken in conjunction with the accompanying drawings, in which:
FIG. 1 is a perspective view of a battery module according to an exemplary embodiment;
FIG. 2 is an exploded perspective view of the battery module according to an exemplary embodiment;
FIG. 3 is a schematic cross-sectional view taken along line I-I' of the battery module of FIG. 1;
FIG. 4 is a schematic cross-sectional view taken along line II-II' of the battery module of FIG. 1;
FIG. 5 is a perspective view of a battery pack according to another exemplary embodiment;
FIG. 6 shows a flow path in the battery pack according to another exemplary embodiment;
FIG. 7 is a schematic cross-sectional view taken along line III-III' of the battery pack of FIG. 5; and
FIG. 8 is a schematic cross-sectional view taken along line IV-IV' of the battery pack of FIG. 5.

### DETAILED DESCRIPTION

Hereinafter, exemplary embodiments in the present disclosure will now be described in detail with reference to the accompanying drawings.

In this specification, an X-direction, a Y-direction and a Z-direction may indicate a direction parallel to an X axis, a direction parallel to a Y axis, and a direction parallel to a Z axis, each shown in the drawings. In addition, unless otherwise described, the X-direction may be a concept including both a +X axis direction and a -X axis direction, which may be equally applied to the Y-direction and the Z-direction.

Secondary batteries may take a variety of forms. In an example, a secondary battery may include a plurality of battery cells. The plurality of battery cells may be bundled to be an intermediate assembly such as a battery module, and the intermediate assemblies may be bundled to be a battery pack. The battery cell may have any of various shapes. For example, the battery cell may have a pouch-shaped outer case surrounding an electrode assembly. In another example, the battery cell may have the electrode assembly accommodated in a cylindrical or prismatic outer case.

The electrode assembly included in the battery cell may have a plurality of electrodes stacked on each other. The electrode may include a current collector and an electrode mixture applied to a surface of the current collector. In some instances, a short circuit might occur between the electrodes due to an external impact or the like, which may lead to ignition of the battery cell. Flame or high-temperature gas emitted from the battery cell may cause serial ignition of another battery cell adjacent thereto. When the battery pack includes the plurality of battery modules, fire occurring in one battery module may lead to fire in the entire battery pack.

Accordingly, there is a need for a method to effectively emit the flame or gas occurring in the battery cell to prevent the serial ignition of another battery cell and another battery module.

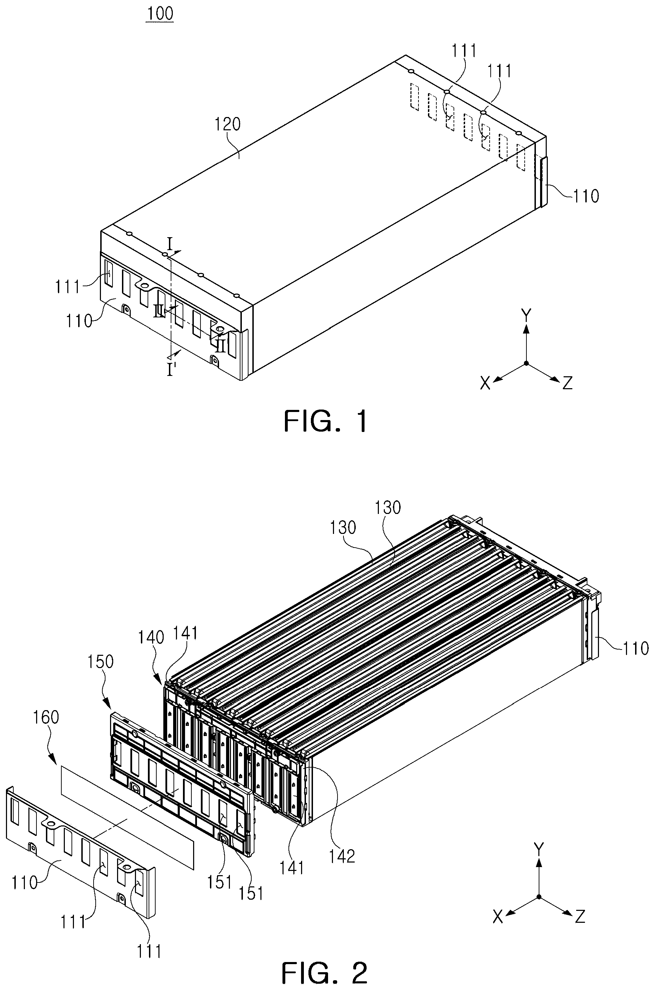

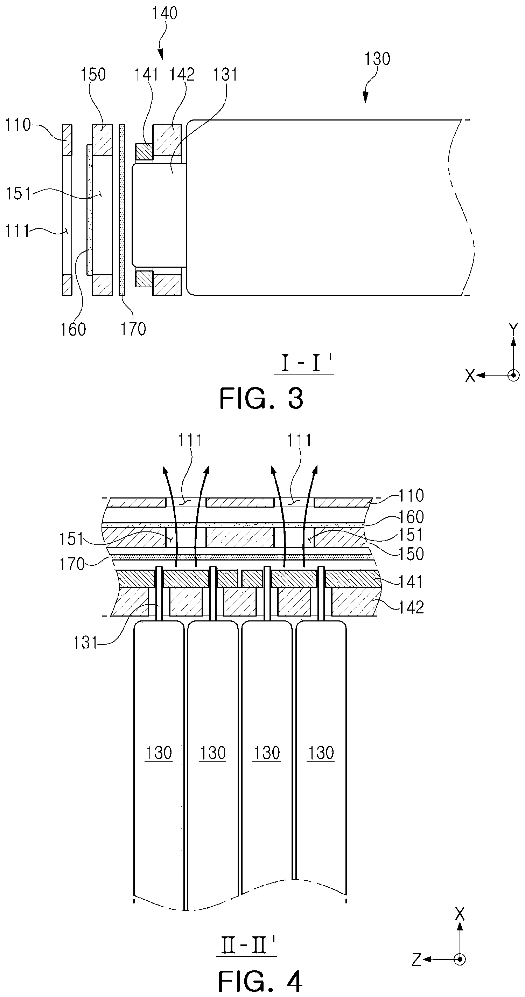

FIG. 1 is a perspective view of a battery module 100 according to an exemplary embodiment; FIG. 2 is an exploded perspective view of the battery module 100 according to an exemplary embodiment; FIG. 3 is a schematic cross-sectional view taken along line I-I' of the battery module 100 of FIG. 1; and FIG. 4 is a schematic cross-sectional view taken along line II-II' of the battery module 100 of FIG. 1.

The battery module 100 includes a plurality of battery cells 130 and an insulating cover 150 disposed on one side of the plurality of battery cells 130. The insulating cover 150 may be made of an insulating material such as plastic.

Referring to FIGS. 2 through 4, the insulating cover 150 includes a venting guide 151. The venting guide 151 provides a path for guiding and emitting flame or gas occurring in the battery cell 130 disposed on one side of the insulating cover 150 in a desired direction or position. For example, referring to FIG. 2, the venting guide 151 may be open in the +X-direction, such that the flame or gas occurring in the battery cell 130 may be limited or wholly prevented from being emitted in the Y-direction or the Z-direction, and emitted in the +X-direction.

In an exemplary embodiment, the venting guide 151 may be open in a direction opposite to the battery cells 130. For example, the insulating cover 150 may be disposed to face the battery cells 130 in the X-direction, and the venting guide 151 may be open in the X-direction. Accordingly, the flame or gas occurring in the battery cell 130 may be emitted through the venting guide 151 away from the battery cells 130.

The battery cell 130 includes an electrode lead 131, and the venting guide 151 may be open in a direction in which the electrode lead 131 is output. Referring to FIGS. 3 and 4, the electrode lead 131 may be output in the X-direction, and the venting guide 151 may be open in the X-direction. In some instances, an outer case surrounding an electrode assembly may have a relatively weak sealing strength at a portion where the electrode lead 131 is output. In an instance where the battery cell 130 is ignited, absent a venting guide 151, the gas or the flame might tend to be emitted in the direction in which the electrode lead 131 of the battery cell 130 is output. The venting guide 151 may be open in the direction in which the electrode lead 131 is output, and the flame or gas may thus be effectively emitted outward from the battery module 100, which may prevent or delay a serial ignition or thermal runaway of the battery cells 130.

In an exemplary embodiment, the battery module 100 may include a bus-bar assembly 140 connected to the battery cell 130. The battery module 100 may include the bus-bar assembly 140 disposed on one side of the battery cell 130. The bus-bar assembly 140 may include at least one bus-bar 141 connected to the battery cell 130. The bus-bar 141 may electrically connect two or more adjacent battery cells 130. For example, the electrode lead 131 output from the battery cell 130 may be connected to the bus-bar 141. The bus-bar assembly 140 may include an insulation plate 142, and the bus-bar 141 may be disposed on the insulation plate 142.

In an exemplary embodiment, the bus-bar assembly 140 and the insulating cover 150 may be sequentially disposed on the battery cell 130 in one direction. Any flame or gas ejected from the battery cell 130 may damage the bus-bar assembly 140 disposed on one side of the insulating cover 150, and then be emitted through the venting guide 151 configured in the insulating cover 150 to the other side of the insulating cover 150 (i.e., in the +X-direction).

In an exemplary embodiment, the insulating cover 150 may be disposed to face the bus-bar assembly 140. For example, the bus-bar assembly 140 may be disposed on the battery cell 130 in the +X-direction and the insulating cover 150 may be disposed on the bus-bar assembly 140 in the +X-direction. In an exemplary embodiment, the insulating cover 150 may include the venting guide 151 open in a direction opposite to the bus-bar assembly 140. For example, the bus-bar assembly 140 and the insulating cover 150 may face each other in the X-direction, and the venting guide 151 may be open in the X-direction.

In an exemplary embodiment, the bus-bar assembly 140 may be disposed in the direction in which the electrode lead 131 is output. Referring to FIGS. 3 and 4, the electrode lead 131 may be output in the X-direction, and the bus-bar assembly 140 may be disposed on the battery cell 130 in the +X-direction. The flame or gas occurring in the battery cell 130 may be mainly emitted in the direction in which the electrode lead 131 is output, and may damage the bus-bar assembly 140, and may be ejected out of the battery module 100 through the venting guide 151 configured in the insulating cover 150 disposed on one side of the bus-bar assembly 140.

In an exemplary embodiment, the battery module 100 may include the plurality of battery cells 130 and outer covers 110, 120 surrounding at least some of the plurality of battery cells 130. The outer covers 110 and 120 may bundle the battery cells 130 into one aggregate and protect the battery cells 130 therein. The outer covers 110 and 120 may include several cover elements. For example, the outer covers 110 and 120 include front and rear covers 110 and may include an upper cover 120. The front and rear covers 110 may each be disposed in the direction in which the electrode lead 131 of the battery cell 130 is output. The upper cover 120 may partially cover a side surface of the battery module 100.

The outer covers 110 and 120 may be made of a material having high strength to protect the battery cells 130. The outer covers 110 and 120 may be made of a metal material such as aluminum, an aluminum alloy, or steel.

The insulating cover 150 is disposed between the outer covers 110, 120 and the battery cell 130 to insulate the outer covers 110, 120 and the battery cell 130 from each other.

In an exemplary embodiment, the outer covers 110 include and cover 120 may include a venting hole 111 corresponding to the venting guide 151. For example, the venting hole 111 may communicate with the venting guide 151. The gas or flame ejected through the venting guide 151 of the insulating cover 150 may escape outward from the battery module 100 through the venting hole 111 of the front and rear covers 110.

FIGS.1 through 4 each show that the battery module 100 includes the outer covers 110 and 120. However, another exemplary embodiment may omit some or all of the outer covers 110 and 120. In this case, the insulating cover 150 may partially form an exterior of the battery module 100.

In an exemplary embodiment, the venting guide 151 may have a structure more easily damaged than the other portions by the flame or gas ejected from the battery cell 130. The venting guide 151 passes through the insulating cover 150. For example, the venting guide 151 may be a hole.

FIGS. 2 through 4 each show that the venting guide 151 has a shape of a hole. However, the venting guide 151 may not necessarily pass through the insulating cover 150. The venting guide 151 may be made more vulnerable to heat or pressure than the other portions. Accordingly, a portion of the insulating cover 150 where the venting guide 151 is formed may be pierced first by the flame or gas ejected from the battery cell 130, and the flame or gas may thus be emitted through the corresponding portion. For example, the insulating cover 150 may include a portion having a smaller thickness than the other portions, where the corresponding portion may function as the venting guide 151. In this case, the portion functioning as the venting guide 151 of the insulating cover 150 may be more easily melted by the flame or high-temperature gas compared to other portions due to its smaller thickness to provide a flow path in which the flame or gas ejected from the battery cell 130 is emitted.

Referring to FIGS. 2 through 4, the battery cells 130 in an exemplary embodiment may be arranged in a first direction, and the plurality of venting guides 151 may be arranged in the first direction. For example, the battery cells 130 may be arranged in the Z-direction, and the plurality of venting guides 151 may be arranged in the Z-direction. The size and number of the venting guide 151 shown in FIG. 2 are only examples. In other embodiments, the venting guide 151 may have any of various sizes and numbers.

The front and rear covers 110 each disposed on the insulating cover 150 include the venting hole 111 corresponding to the venting guide 151. Referring to FIG. 2, the front and rear covers 110 may each correspond to the venting guide 151 and include the plurality of venting holes 111 arranged in the Z-direction. The size and number of the venting hole 111 shown in FIG. 2 are exemplary. In other embodiments, venting holes 111 may have differing sizes and numbers.

In an embodiment according to the invention, a cover sheet 160 is disposed on the insulating cover 150. The cover sheet 160 prevents foreign material outside the battery module 100 from being introduced into the venting guide 151.

The cover sheet 160 may block the introduction of the foreign material from outside the battery module 100, while allowing flame or gas to be emitted through the venting hole 111.

In an exemplary embodiment, the cover sheet 160 may be made of a material which may be more easily melted than the insulating cover 150 by the flame or gas. For example, the cover sheet 160 may be made of a material such as polycarbonate. In another exemplary embodiment, the cover sheet 160 and the insulating cover 150 may be integrally formed with each other.

Meanwhile, in an exemplary embodiment, the battery module 100 may include a heat-resistant sheet 170 disposed between the bus-bar assembly 140 and the insulating cover 150 to prevent the flame or gas partially emitted from the venting guide 151 from being introduced into another venting guide 151. The heat-resistant sheet 170 may be made of a material having fire resistance, heat resistance, or heat insulation characteristics. For example, the heat-resistant sheet 170 may be a ceramic fiber.

An exemplary embodiment may omit at least one of the cover sheet 160 and the heat-resistant sheet 170.

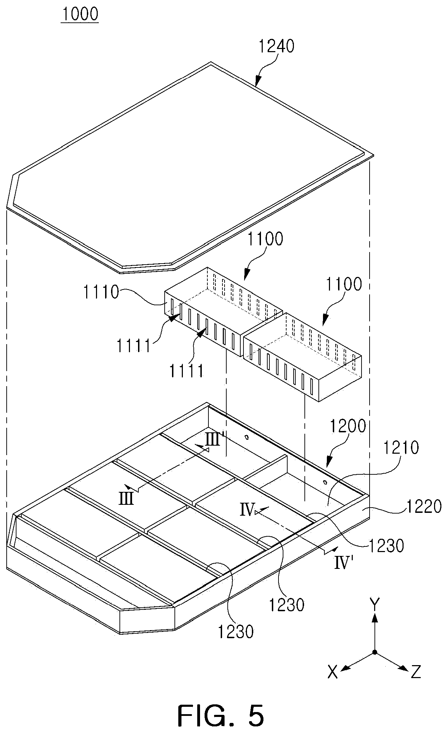

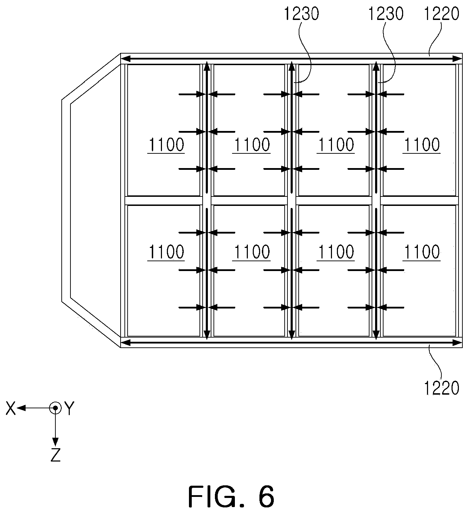

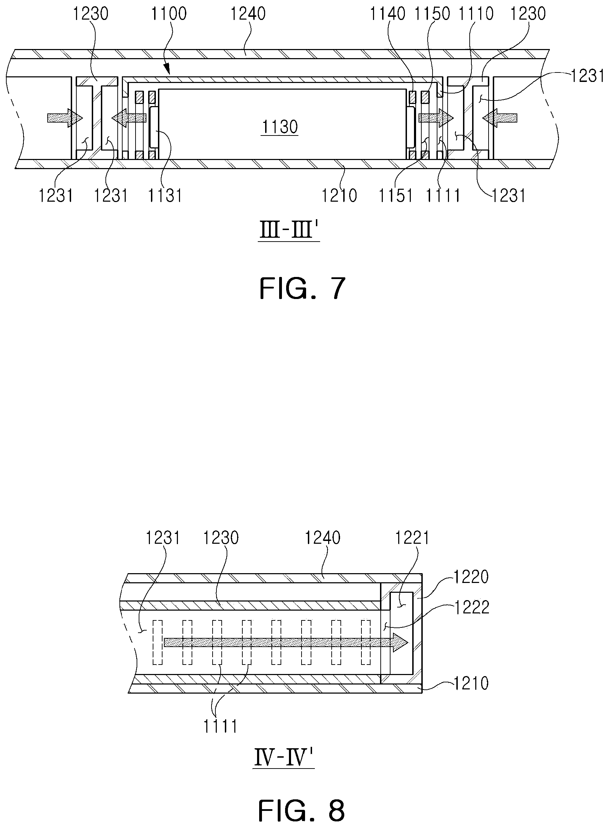

FIG. 5 is a perspective view of a battery pack 1000 according to another exemplary embodiment; FIG. 6 shows a flow path in the battery pack 1000 according to another exemplary embodiment; FIG. 7 is a schematic cross-sectional view taken along line III-III' of the battery pack 1000 of FIG. 5; and FIG. 8 is a schematic cross-sectional view taken along line IV-IV' of the battery pack 1000 of FIG. 5.

Referring to FIG. 5, a plurality of battery modules 1100 are disposed in a pack housing 1200. Each of the plurality of battery modules 1100 may include a venting hole 1111 formed in a side surface. The pack housing 1200 may include a lower plate 1210, a side frame 1220 extended from an edge of the lower plate 1210, and an upper plate 1240 covering the battery modules 1100.

The battery module 1100 of FIGS. 5 through 8 may include some or all of the components included in the battery module 100 described with reference to FIGS. 1 through 4.

For example, referring to FIG. 7, the battery module 1100 may include battery cells 1130 and an outer cover 1110 surrounding at least some of the plurality of battery cells 1130. The battery module 1100 may include an insulating cover 1150 disposed on one side of the battery cell 1130, and the insulating cover 1150 may include a venting guide 1151. Flame or gas occurring in the battery cell 1130 may be emitted outward from the battery module 1100 through the venting guide 1151. The outer cover 1110 may include a venting hole 1111 corresponding to the venting guide 1151. The flame or gas occurring in the battery cell 1130 may be emitted through the venting guide 1151 and subsequently the venting hole 1111. The battery cell 1130 may include an electrode lead 1131 output in one direction, and the electrode lead 1131 may be connected to a bus-bar assembly 1140. The insulating cover 1150 may be disposed to face the bus-bar assembly 1140.

The insulating cover 1150 may be disposed between the outer cover 1110 and the bus-bar assembly 1140, and the insulating cover 1150 and the outer cover 1110 may respectively include the venting guide 1151 and the venting hole 1111, which emit the gas or flame occurring in the battery cell 1130.

The pack housing 1200 may include a partition wall 1230 partitioning an inner space of the pack housing. At least one battery module 1100 may be disposed in the space partitioned by the partition wall 1230. Referring to FIG. 6, the flame or gas emitted from the battery module 1100 may be directed into the side frame 1220 through the partition wall 1230. The flame or gas flowing in the side frame 1220 may be ejected outward from the battery pack 1000 through a hole configured in the pack housing.

Referring to FIGS. 6 and 7, the flame or gas occurring in the battery cell 130 may be emitted outwardly from the battery module 1100 through the venting guide 151 of the insulating cover 150 and the venting hole 1111 of the outer cover 1110. The emitted flame or gas may be introduced into a first flow path 1231 formed by the partition wall 1230. The first flow path 1231 may be extended in a length direction of the partition wall 1230.

In another exemplary embodiment, the partition wall 1230 may form two or more first flow paths 1231 spatially separated from each other. In another exemplary embodiment, one partition wall 1230 may form two or more first flow paths 1231 spatially separated from each other by structural shape. Referring to FIG. 7, the partition wall 1230 may define the first flow path 1231 disposed on each of two sides of the partition wall 1230. For example, the partition wall 1230 may be formed in a shape of a beam having an "I"-shaped cross section, and define one flow path on each of the two sides thereof. Other partition wall 1230 shapes may be utilized in other examples.

Referring to FIG. 8, the side frame 1220 may form a second flow path 1221. The second flow path 1221 may be connected to the first flow path 1231 of the partition wall 1230. In another exemplary embodiment, the second flow path 1221 may include an inner space of the side frame 1220. For example, the side frame 1220 may be formed in a shape of a beam including an inner space and include a hole 1222 for communicating the first flow path 1231 of the partition 1230 and the internal space to each other. The gas or flame ejected from the venting hole 1111 may be primarily introduced into the first flow path 1231 of the partition 1230, and moved in the length direction of the partition 1230 along the first flow path 1231 to be secondarily introduced into the second flow path 1221 formed by the side frame 1220. The gas or flame introduced into the second flow path 1221 may be emitted outward from the pack housing 1200 through an output configured in the pack housing 1200.

As set forth above, according to an exemplary embodiment of the present disclosure, it may be possible to minimize the phenomenon in which the thermal runaway of a battery cell in the battery module leads to the thermal runaway of another battery cell or another battery module.

In addition, the battery module according to an exemplary embodiment of the present disclosure may emit the flame, gas, or dust occurring due to abnormal action of the battery cell, such as the thermal runaway, in the desired direction. This may improve safety of the battery module or battery pack.

## Claims

1. A battery module (100) comprising:
a plurality of battery cells (130); and
insulating covers (150), each insulating cover (150) being respectively disposed on opposite sides of the plurality of battery cells (130),
each of the insulating covers (150) comprising a venting guide (151) configured to emit flame or gas occurring in one or more of the plurality of battery cells (130),
wherein the plurality of battery cells (130) include electrode leads (131) output in a first direction,
wherein each of the insulating covers (150) faces the plurality of battery cells (130) in the first direction,
and wherein the venting guide (151) passes through each of the insulating covers (150) in the first direction,
wherein the battery module (100) further includes front and rear covers (110) disposed on opposite sides of the plurality of battery cells (130),
wherein the insulating covers (150) are respetively interposed between the plurality of battery cells (130) and the front and rear covers (110), and
wherein the front and rear covers (110) each include at least one venting hole (111) communicating with the venting guide (151), and
wherein a cover sheet (160) is disposed between the insulating covers (150) and at least one of the front cover or the rear cover (110) to prevent foreign material from being introduced into the venting guide (151).

2. The battery module (100) of claim 1, further comprising a bus-bar assembly (140) including at least one bus-bar (141) electrically connected to one or more of the plurality of battery cells (130),
wherein the insulating cover (150) faces the bus-bar assembly (140).

3. The battery module (100)of claim 2, further comprising a heat-resistant sheet (170) disposed between the insulating cover (150) and the bus-bar assembly (140).

4. A battery pack (1000) comprising:
a pack housing (1200) acccommodating a plurality of battery modules (100, 1100) of claim 1.

5. The battery pack (1000) of claim 4, wherein the pack housing (1200) includes a partition wall (1230) partitioning an inner space of the pack housing (1200), the partition wall (1230) forming a first flow path (1231) guiding the flame or gas emitted from the venting guide (1151).

6. The battery pack (1000) of claim 5, wherein the pack housing (1200) includes a lower plate (1210) and a side frame (1220) disposed on an edge of the lower plate (1210), wherien the side frame (1220) forms a second flow path (1221) communicating with the first flow path (1231).

7. The battery pack (1000) of claim 4, further comprising a bus-bar assembly (1140) including at least one bus-bar (1141) electrically connected to one or more of the plurality of battery cells (1130),
wherein the insulating cover (1150) faces the bus-bar assembly (1140).

8. The battery pack (1000) of claim 7, further comprising a heat-resistant sheet (1170) disposed between the insulating cover (1150) and the bus-bar assembly (1140).

9. The battery pack (1000) of claim 4, wherein the plurality of battery cells (1130) include electrode leads (1131) output in a first direction, wherein the insulating cover (1150) faces the plurality of battery cells (1130) in the first direction, and wherein the venting guide (1151) passes through the insulating cover (1150) in the first direction.

10. The battery pack (1000) of claim 5, wherein the partition wall (1230) forms two first flow paths (1231) spatially separated from each other by its structural shape.

## Patentansprüche

1. Batteriemodul (100), umfassend:
eine Mehrzahl von Batteriezellen (130); und
isolierende Abdeckungen (150), wobei jede isolierende Abdeckung (150) jeweils auf gegenüberliegenden Seiten der Mehrzahl von Batteriezellen (130) angeordnet ist,
wobei jede der isolierenden Abdeckungen (150) eine Entlüftungsführung (151) umfasst, die dazu angepasst ist, eine Flamme oder ein Gas auszustoßen, die bzw. das in einer oder mehreren der Mehrzahl von Batteriezellen (130) auftritt,
wobei die Mehrzahl von Batteriezellen (130) in einer Richtung hinausführende Elektrodenleitungen (131) beinhaltet,
wobei jede der isolierenden Abdeckungen (150) der Mehrzahl von Batteriezellen (130) in der ersten Richtung zugewandt ist,
und wobei die Entlüftungsführung (151) durch jede der isolierenden Abdeckungen (150) in der ersten Richtung verläuft,
wobei das Batteriemodul (100) ferner vordere und hintere Abdeckungen (110) beinhaltet, die auf gegenüberliegenden Seiten der Mehrzahl von Batteriezellen (130) angeordnet sind,
wobei die isolierenden Abdeckungen (150) abwechselnd zwischen der Mehrzahl von Batteriezellen (130) und den vorderen und hinteren Abdeckungen (110) angeordnet sind, und
wobei die vorderen und hinteren Abdeckungen (110) jeweils mindestens ein Entlüftungsloch (111) beinhalten, das mit der Entlüftungsführung (151) in Verbindung steht, und
wobei eine Abdeckfolie (160) zwischen den isolierenden Abdeckungen (150) und mindestens einer der vorderen Abdeckung oder der hinteren Abdeckung (110) angeordnet ist, um zu verhindern, dass Fremdmaterial in die Entlüftungsführung (151) eingeführt wird.

2. Batteriemodul (100) gemäß Anspruch 1, ferner umfassend eine Sammelschienenanordnung (140), die mindestens eine Sammelschiene (141) beinhaltet, die elektrisch mit einer oder mehreren der Mehrzahl von Batteriezellen (130) verbunden ist,
wobei die isolierende Abdeckung (150) der Sammelschienenanordnung (140) zugewandt ist.

3. Batteriemodul (100) gemäß Anspruch 2, ferner umfassend eine wärmebeständige Folie (170), die zwischen der isolierenden Abdeckung (150) und der Sammelschienenanordnung (140) angeordnet ist.

4. Batteriepack (1000), umfassend:
ein Packgehäuse (1200), das eine Mehrzahl von Batteriemodulen (100, 1100) gemäß Anspruch 1 aufnimmt.

5. Batteriepack (1000) gemäß Anspruch 4, wobei das Packgehäuse (1200) eine Trennwand (1230) beinhaltet, die einen Innenraum des Packgehäuses (1200) unterteilt, wobei die Trennwand (1230) einen ersten Strömungsweg (1231) bildet, der die Flamme oder das Gas führt, die bzw. das von der Entlüftungsführung (1151) ausgestoßen wird.

6. Batteriepack (1000) gemäß Anspruch 5, wobei das Packgehäuse (1200) eine untere Platte (1210) und einen Seitenrahmen (1220) beinhaltet, der an einer Kante der unteren Platte (1210) angeordnet ist, wobei der Seitenrahmen (1220) einen zweiten Strömungsweg (1221) bildet, der mit dem ersten Strömungsweg (1231) in Verbindung steht.

7. Batteriepack (1000) gemäß Anspruch 4, ferner umfassend eine Sammelschienenanordnung (1140), die mindestens eine Sammelschiene (1141) beinhaltet, die elektrisch mit einer oder mehreren der Mehrzahl von Batteriezellen (1130) verbunden ist,
wobei die isolierende Abdeckung (1150) der Sammelschienenanordnung (1140) zugewandt ist.

8. Batteriepack (1000) gemäß Anspruch 7, ferner umfassend eine wärmebeständige Folie (1170), die zwischen der isolierenden Abdeckung (1150) und der Sammelschienenanordnung (1140) angeordnet ist.

9. Batteriepack (1000) gemäß Anspruch 4, wobei die Mehrzahl von Batteriezellen (1130) in einer Richtung hinausführende Elektrodenleitungen (1131) beinhaltet, wobei die isolierende Abdeckung (1150) der Mehrzahl von Batteriezellen (1130) in der ersten Richtung zugewandt ist, und wobei die Entlüftungsführung (1151) durch die isolierende Abdeckung (1150) in der ersten Richtung verläuft.

10. Batteriepack (1000) gemäß Anspruch 5, wobei die Trennwand (1230) zwei erste Strömungswege (1231) bildet, die durch ihre Strukturform räumlich voneinander getrennt sind.

## Revendications

1. Module de batterie (100) comprenant :
une pluralité de cellules de batterie (130) ; et
des couvercles isolants (150), chaque couvercle isolant (150) étant respectivement disposé sur des côtés opposés de la pluralité de cellules de batterie (130),
chacun des couvercles isolants (150) comprenant un guide de ventilation (151) configuré pour émettre une flamme ou un gaz se produisant dans un ou plusieurs de la pluralité de cellules de batterie (130),
où la pluralité de cellules de batterie (130) comprennent des fils d'électrode (131) sortis dans une première direction,
où chacun des couvercles isolants (150) fait face à la pluralité de cellules de batterie (130) dans la première direction,
et où le guide de ventilation (151) passe à travers chacun des couvercles isolants (150) dans la première direction,
où le module de batterie (100) comprend en outre des couvercles avant et arrière (110) disposés sur des côtés opposés de la pluralité de cellules de batterie (130),
où les couvercles isolants (150) sont respectivement intercalés entre la pluralité de cellules de batterie (130) et les couvercles avant et arrière (110), et
où les couvercles avant et arrière (110) comprennent chacun au moins un trou de ventilation (111) communiquant avec le guide de ventilation (151), et
où une feuille de couvercle (160) est disposée entre les couvercles isolants (150) et au moins l'un du couvercle avant ou du couvercle arrière (110) pour empêcher l'introduction de matière étrangère dans le guide de ventilation (151).

2. Module de batterie (100) selon la revendication 1, comprenant en outre un ensemble barre omnibus (140) comprenant au moins une barre omnibus (141) connectée électriquement à un ou plusieurs de la pluralité de cellules de batterie (130),
où le couvercle isolant (150) fait face à l'ensemble barre omnibus (140).

3. Module de batterie (100) selon la revendication 2, comprenant en outre une feuille résistante à la chaleur (170) disposée entre le couvercle isolant (150) et l'ensemble barre omnibus (140).

4. Bloc-batterie (1000) comprenant :
un boîtier de bloc (1200) logeant une pluralité de modules de batterie (100, 1100) selon la revendication 1.

5. Bloc-batterie (1000) selon la revendication 4, où le boîtier de bloc (1200) comprend une paroi de séparation (1230) séparant un espace intérieur du boîtier de bloc (1200), la paroi de séparation (1230) formant un premier trajet d'écoulement (1231) guidant la flamme ou le gaz émis par le guide de ventilation (1151).

6. Bloc-batterie (1000) selon la revendication 5, où le boîtier de bloc (1200) comprend une plaque inférieure (1210) et un cadre latéral (1220) disposé sur un bord de la plaque inférieure (1210), où le cadre latéral (1220) forme un deuxième trajet d'écoulement (1221) communiquant avec le premier trajet d'écoulement (1231).

7. Bloc-batterie (1000) selon la revendication 4, comprenant en outre un ensemble barre omnibus (1140) comprenant au moins une barre omnibus (1141) connectée électriquement à un ou plusieurs de la pluralité de cellules de batterie (1130),
où le couvercle isolant (1150) fait face à l'ensemble barre omnibus (1140).

8. Bloc-batterie (1000) selon la revendication 7, comprenant en outre une feuille résistante à la chaleur (1170) disposée entre le couvercle isolant (1150) et l'ensemble barre omnibus (1140).

9. Bloc-batterie (1000) selon la revendication 4, où la pluralité de cellules de batterie (1130) comprennent des fils d'électrode (1131) sortis dans une première direction, où le couvercle isolant (1150) fait face à la pluralité de cellules de batterie (1130) dans la première direction, et où le guide de ventilation (1151) passe à travers le couvercle isolant (1150) dans la première direction.

10. Bloc-batterie (1000) selon la revendication 5, où la paroi de séparation (1230) forme deux premiers trajets d'écoulement (1231) séparés spatialement l'un de l'autre par sa forme structurelle.
